# EUROPEAN PATENT SPECIFICATION

(11) **EP 2 159 454 B1**
(45) Date of publication and mention of the grant of the patent: **21.12.2016**
(21) Application number: 08162939.6
(22) Date of filing: 26.08.2008
(51) Int. Cl.: F16H 57/04, F16H 57/02

(54) **Idler gear and hub with coating**
Mitlaufzahnrad und Nabe mit Beschichtung
Engrenage baladeur et moyeu dotés d'un revêtement

(43) Date of publication of application: 03.03.2010
(73) Proprietor: Perkins Engines Company Limited, Eastfield Peterborough PE1 5NA (GB)
(72) Inventor: Snell, Jon Gerald, Peterborough, Cambridgeshire (GB)
(74) Representative: BRP Renaud & Partner mbB Rechtsanwälte Patentanwälte Steuerberater

(56) References cited:
- EP-A- 1 666 573
- WO-A-2005/047737
- GB-A- 2 254 107
- GB-A- 2 330 188
- JP-A- 5 346 141
- JP-A- 9 112 658
- JP-A- 10 061 751
- JP-A- 2002 098 299
- US-A1- 2008 187 260

## Description

### Technical Field

The present disclosure relates generally to an idler gear hub and idler gear, and, more specifically, to an assembly of a gear hub and idler gear.

### Background

An idler gear in timing gears for a combustion engine is traditionally mounted on an idler gear hub, using a bearing having rotating elements such as balls or needles, for allowing the idler gear to rotate freely around the hub, which functions as an axis. The bearing reduces friction between the idler gear and the hub and allows lubrication to enter between the hub and the idler gear. A bearing has the disadvantage that it is a separate part, which has to be mounted to the hub, the idler gear or both, which is time consuming and costly. Moreover, bearings can be prone to damage, for example by wear or shock, which means that they have to be replaced, which again is difficult and time consuming. Idler gear plain bearings are known, in which a high oil flow rate is necessary between the hub and the idler gear, in order to cool the bearing. The oil is fed under pressure, via the hub, into the bearing. Large radial clearances are necessary, which allow relatively large particles to be carried through the bearing, by the oil. Large clearances however lead to large variations in the position of the idler gear relative to the hub, which form center distance variations. Especially with changing loads on the idler gear such large center distance variations will lead to large backlashes being cut into the idler gear, especially into a bearing surface. Which will lead to further wear and to increased noise produced by the engine.

German Offenlegungsschrift DE10061397 A1 (the "397 application) discloses a planetary gear assembly, in which planet gears are born on planet axes by oil or grease lubricated slide bearings. The bearings comprise at least hard surface bearing areas. These surface areas are made of a hardened material. In embodiments of the planetary gear assembly of the "397 application a surface can be formed of a layer of DLC. In this known application the axes are planetary axes, rotating around a central incoming, driving axis and a housing part rotating around the central axes.

In this known arrangement a space is provided in which the planet gears and axes are provided. This space is at least partly filled with oil or grease, in order to maintain oil or grease lubrication of the slide bearings. The gear has a width approximately equal to the length of the axel within the gear. Grease or oil has to be forced in between the opening in the gear and the axel. Particles which enter the slide bearings, carried by the oil or grease, shall be grinded by the surfaces, meaning that both surfaces forming the slide bearing should be provided by said layer of DLC, whereas there remains a relatively large radial gap between the planet axes and the planet gear.

JP 09-112658 discloses an idler gear supporting device with a bearing bush made of polyimide resin which is fitted by pressure on a boss of a timing gear. JP 09-112658 is directed towards providing an oiling system that has to result in a reduced vibration of the idler gear, the oiling system depending on the polyimide bushing, but also on the grooves therein.

US-A-2008/0187260 discloses bearing bushes or half liners made of a low friction material. The bushes or liners constitute an additional element between the rotating parts.

Although idler gear plain bearings are advantageous over idler gear bearings as traditionally used, because of the reduced number of parts, such bearings still necessitate high pressure oil lubrication having high flow through the bearings. Over time such bearings may lead to increasing noise levels. Moreover, such lubrication necessitates a hermetically closed timing gear case, in order to prevent oil to be forced out of the timing gear case.

The disclosed idler gear assembly, hub and idler gear, timing gear case and engine aim to provide for an alternative or address at least one of the disadvantages or problems as discussed before and/or to further improve existing solutions.

### Summary of the Invention

In one aspect the disclosure is directed to an idler gear assembly. This assembly can comprise an idler gear having a toothed rim and a central opening and an idler gear hub The idler gear hub can have a mount for mounting to a gear housing of an engine and a hub protruding from the mount. The central opening of the gear is positioned over the gear hub, providing an interface between the gear and the hub, which interface comprises a low friction coating layer on at least one of the hub and the gear.

In another aspect the disclosure is directed to a hub for an idler gear. The hub can comprise a mounting flange and a hub extending from the flange. The hub can have an outer peripheral surface comprising a low friction coating

In still another aspect the disclosure is directed to an idler gear, comprising a toothed rim and a central bore having a internal peripheral surface. The internal peripheral surface can comprise a low friction coating.

In another aspect the disclosure is directed to a timing gear case for a combustion engine. The timing gear case can comprise a gear case with a gear housing space including a bottom and a wall. Timing gears including an idler gear can be provided in the gear housing space. An idler gear hub can be provided in or on the bottom and the idler gear can be mounted directly on the idler gear hub. A coating can be provided between the idler gear hub and the idler gear, forming a bearing surface.

In a further aspect the disclosure is directed to a combustion engine. The engine can comprise a gear case including a bottom and a wall. Timing gears including an idler gear can be provided in the gear case. An idler gear hub can be provided in or on the bottom and the idler gear can be mounted directly on the idler gear hub. A coating can be provided between the idler gear hub and the idler gear, forming a bearing surface.

### Brief Description of the Drawings

Fig. 1 schematically in side view an engine comprising a timing gear case;
Fig. 2 and 3 a frontal and rear view respectively of a timing gear housing;
Fig. 4 a frontal view of a timing gear case including timing gears;
Fig. 5 in perspective view schematically an idler gear hub and an idler gear;
Fig. 6 in cross section schematically an idler gear mounted on an idler gear hub; and
Fig. 7 in cross section an idler hub, gear and retaining plate in disassembled state.

### Detailed Description

In this description the same or similar features or elements have the same or corresponding reference signs. The embodiments shown are only shown and discussed by way of examples and should not be construed as limiting the disclosure.

In this description engine has to be understood as including internal combustion engines, such as but not limited to gasoline engines, petrol engines, natural gas engines and biofuel engines. In this description engines will only be described as far as necessary for understanding the disclosure. Timing gear has to be understood as at least meaning a set of gears interacting for timing at least fuel injection into and/or exhaust from cylinders of an engine based on a relative position of a crankshaft. Idler gear has to be understood as at least meaning a gear in a timing gear which is neither directly driven by nor directly driving a shaft.

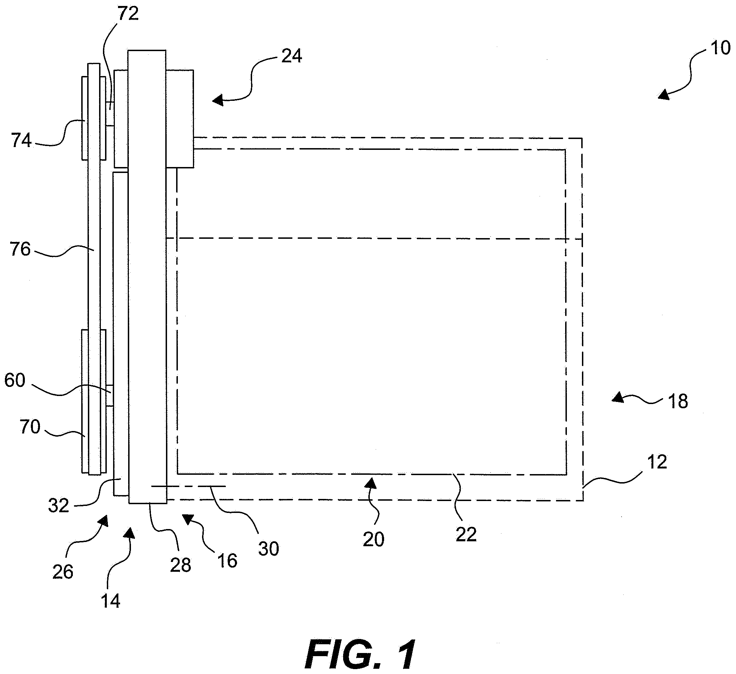

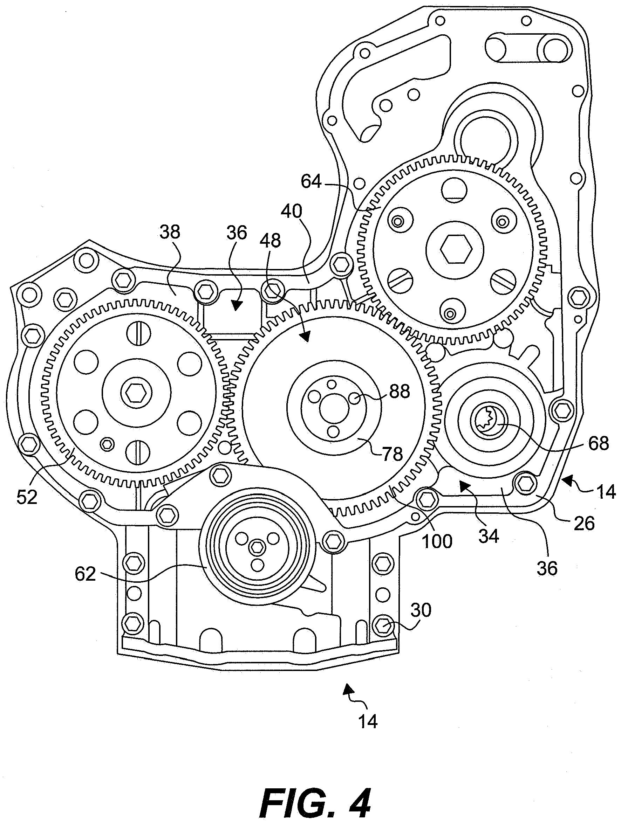

Fig. 1 shows, by way of example, schematically an engine 10 comprising an engine block 12 (shown in dashed lines) and a timing gear case 14. The engine block 12 has a first end 16 and an opposite end 18. The timing gear case 14 is connected to the first end 16. The engine block 12 comprises a coolant circuit 20, schematically indicated by dotted lines 22, and a fluid pump 24, provided at the first end 16 and in fluid connection with the coolant circuit 20. The fluid pump 24 can be referred to as a coolant pump. In an embodiment the timing gear case 14 can comprise a gear housing portion 26 and an engine block engaging portion 28. The engine block engaging portion 28 can be part of the gear housing portion 26. The timing gear case 14 can be connected to the engine block 12 by the engine block engaging portion 28. The timing gear case 14 can be connected to the engine block 12 by bolts 30. A timing gear cover 32 can be removably placed on the gear housing portion 26. As is shown in fig. 4, timing gears 34 can be provided in the space 36 enclosed between at least the gear housing portion 26 and the timing gear cover 32. The gear housing portion 26 can be cast. In an embodiment the gear housing portion 26 can be die cast. In another embodiment the gear housing portion 26 can be sand cast.

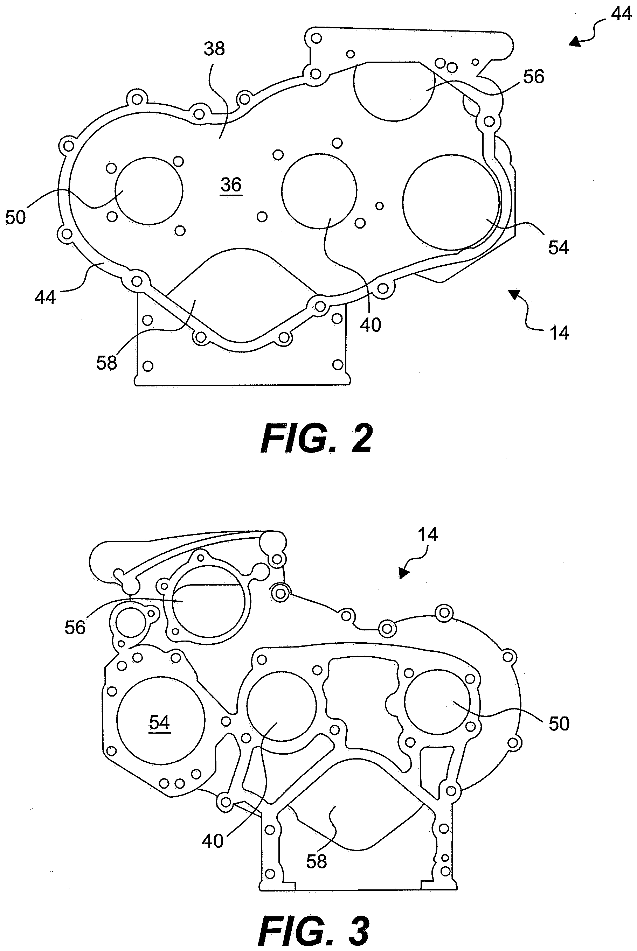

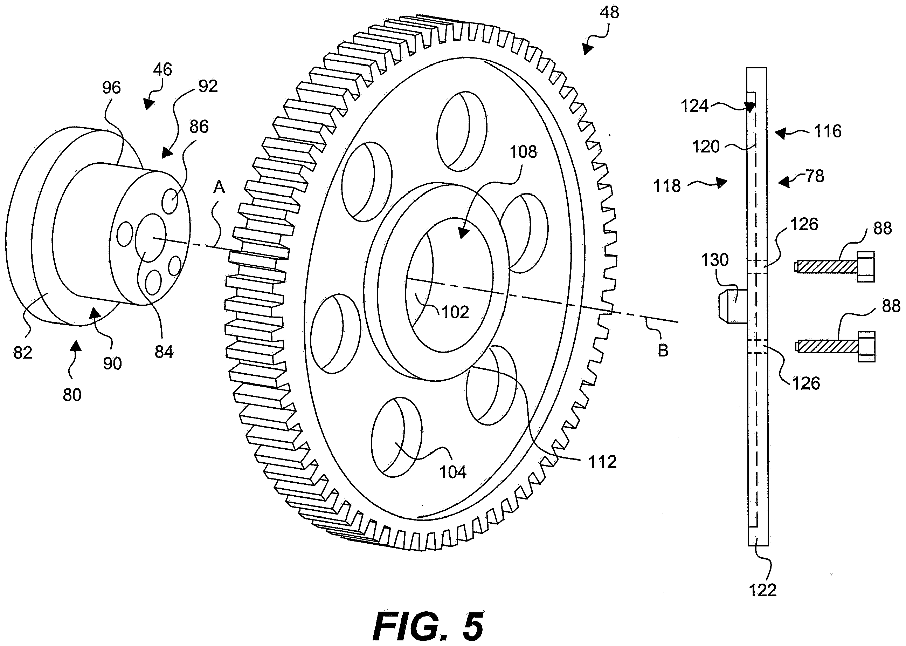

As is shown in fig. 2 and 3, the gear housing portion 26 can have a bottom surface 38 and a peripheral wall 42 at the first side 44, defining at least part of the space 36. Through the bottom surface 38 a first opening 40 is provided for a hub 46 connected to the engine block 12, as is shown in fig. 4 and 5. An idler gear 48 is born on the hub 46 and can rotate freely. A second opening 50 can be provided for a camshaft (not shown) to extend through. A camshaft gear 52 can be mounted on the camshaft and can be in engagement with the idler gear 48 within the space 36. A third opening 54 can be provided for a power take off (here shown as a left hand side power take off) in which opening 54 a pump or compressor (not shown) can be fitted, driven by the idler gear 48. A fuel injection pump opening 56 can be provided above the first opening 40. A crank shaft opening 58 can be provided. The crank shaft opening 58 can be provided below the idler gear 48. A crank shaft 60 (shown in fig. 1) can extend from the engine block 12 through the crank shaft opening 58. A main gear 62 can be mounted on the crank shaft 60, within the gear housing portion 26, for driving the idler gear 48. A fuel injection pump gear 64 can be mounted over the fuel injection opening 56, in toothed engagement with the idler gear 48, for driving a fuel injection pump 66 (not shown). A power take off gear 68 can be mounted over the power take off opening 54, in toothed engagement with the idler gear 48, for driving for example the pump or compressor.

A first pulley 70 can be mounted to the crank shaft 60, as shown in fig. 1, whereas a second pulley 74 can be mounted to an axis 72 of the fluid pump 24. A belt 76 can be led over the first pulley 70 and second pulley 74.

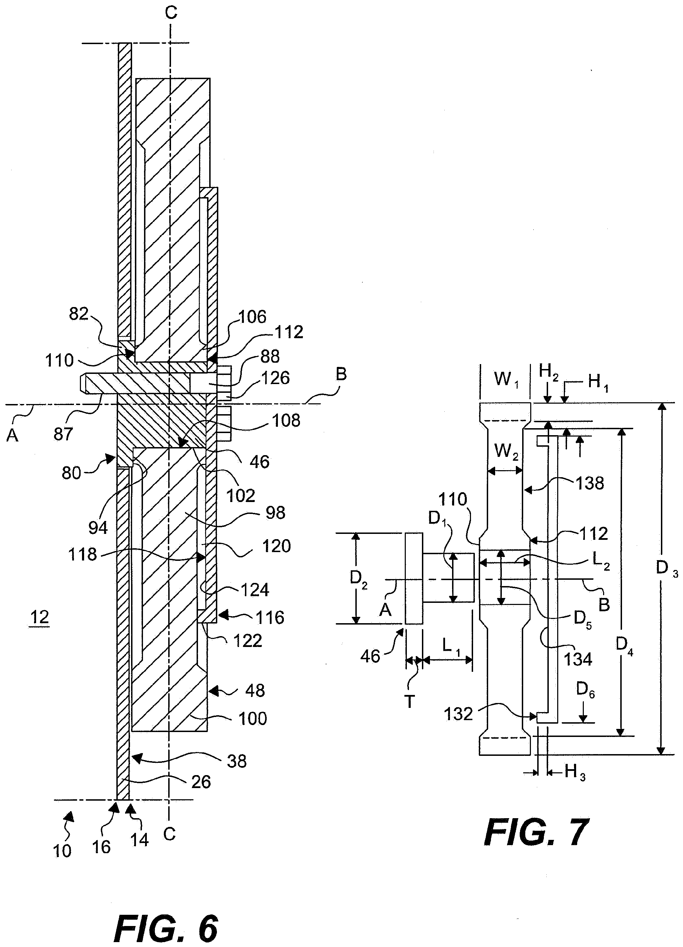

Fig. 5 - 7 show schematically an arrangement comprising a hub 46, which can be referred to as idler gear hub 46, an idler gear 48, and a retaining plate 78. In fig. 5 and 7 the arrangement is shown in disassembled state, in fig. 6 in an assembled state, mounted to an end 16 of an engine block 10. In another embodiment the idler hub 46 can be mounted on the bottom surface 38 of the gear housing 14. The hub 46 can be provided with or mounted on a mount 80 for positioning against the engine block 12 or the gear housing 14. The mount 80 can be or can be provided with a flange 82. The hub 46 can be substantially cylindrical and can have a central bore 84, extending through the hub 46 and mount 80. Further bores 86 can be provided, for allowing bolts 88 to be passed through, into corresponding holes 87 in the engine block 12. These corresponding holes 87 can be provided with internal screw thread, corresponding with external screw thread of the bolts 88.

The hub 46 can have a first end 90 at the mount 80 and an opposite second, free end 92. The hub 46 can have a length L1 in the direction of the axis A, between the mount 80 and the second end 92. The mount 80 can have a thickness T seen in the direction of the axis A of the hub 46 and mount 80. The hub can have an external diameter D1. The mount can have an external diameter D2. When the diameter D2 is larger than the diameter D1, the mount will have a ring shaped bearing surface 94 against which the idler gear 48 can rest, as is shown in fig. 6. The hub 46 can have an outer peripheral surface 96, which can be coaxially with the central axis A. In an embodiment the outer peripheral surface 96 can be stepped, conical or shaped otherwise.

The idler gear 48 can be substantially cylindrical, having a central portion 98 and a toothed rim 100. The central portion can have a central opening 102, coaxial with the toothed rim 100. Openings 104 can be provided in the central portion 98, around the central opening 102, reducing the weight of the gear 48. Around the central opening 102 a cylindrical rim 106 can be provided. The central opening 102 extends through gear 48 in an axial direction, concentric with a central axis B of the gear 48. The central opening 102 has an interior peripheral surface 108, coaxial with the central axis B. The central portion 98, extending between the rim 106 and the toothed rim 100, can be thinner in axial direction than the toothed rim 100 and the rim 106. The rim 106 can form a first substantially ring shape bearing surface 110 at a first side of the gear 48 and a second substantially ring shape bearing surface 112 at a second side of the gear 48. The gear 48 can be mirror symmetric over a plane C - C perpendicular to the axis B.

The central opening 102 can have a length L2 in the direction of the axis B, between the first and second bearing surfaces 110, 112. The toothed rim 100 can have a width W1 in the direction of the axis B which can be equal to the length L2. The central portion 98 between the rim 106 and the toothed rim 100 can have a second thickness W2. The gear 48 can have a diameter D3, including the toothed rim 100. The toothed rim 100 can have a height H1, measured in the radial direction, whereas teeth 114 of the toothed rim 100 can have a height H2, which can be smaller than the height H1. Central portion 98 can have a substantially circular shape in frontal view, which can have a diameter D4. The diameter D4 can be (D3 - 2xH₁). The central opening 102 can have a diameter D5.

The retaining plate 78 can be substantially circular, having a diameter D6. The retaining plate 78 can have a first side 116 and an opposite second side 118. The first side 116 can be substantially flat. The second side 118 can have a central recess 120, surrounded by a peripheral wall or rim 122 and having a bottom surface 124. In an assembled state, as shown in fig. 6, the first side 116 can face away from the gear 48, whereas the bottom surface 124 can face the hub 46 and gear 48. Openings 126 are provided near a center 128 of the retaining plate 78, through which the bolts 88 can pass. From the bottom surface 124 a central boss 130 can extend, which can fit in the central bore 84, for centering the retaining plate 78 relative to the hub 46 and gear 48. The peripheral wall or rim 122 can be provided with a third bearing surface 132, substantially parallel to the bottom surface 124. The bottom surface 124 can be provided with a fourth bearing surface 134 located centrally. The peripheral wall or rim 122 can have a height H3 perpendicular to the bottom surface 124.

In an embodiment the mount 80 or hub 46 can be provided with elements for mounting the hub 46 to the engine block 12 directly, without the idler gear 48 or retaining plate 78. In one such embodiment one or more of the bores 86 can be provided for receiving a bolt 88 to be screwed into a corresponding hole 87 in the engine block 12 or in the timing gear case 14, such that screw will not extend beyond the end 92. In such embodiment the retaining plate 78 and idler gear can be mounted and dismounted separate from mounting the hub 46.

The length L1 of the hub 46 can be between 0 and 0.1 mm larger than the length L2 of the central opening 102. In another embodiment the difference in length between L1 and L2 can be between 10 and 80 micrometer. The difference can for example be about 50 micrometer or less. The diameter D1 of the hub 46 can be smaller than the diameter D5 of the central opening 102. The diameter D1 can in an embodiment be between about 0 and 0.5 mm smaller than the diameter D5 of the central opening 102. In an embodiment the difference between diameters D1 and D5 can be between 10 and 80 micrometers. In a further embodiment the difference between D1 and D5 can be about 50 micrometer or less. The roundness of the hub 46 and central opening 102 can be such that the central opening 102 can be positioned over the hub 46 with a substantially even clearance. In an embodiment the clearance can be between about 0.25 and 0.75 times the difference between D1 and D5. The diameter D6 of the retaining plate 78 can be slightly smaller than the diameter D4 of the central portion 98 of the idler gear 48. In an embodiment the diameter D6 can be between 50 and 98% of the diameter D4. In another embodiment the diameter D6 can be between 75 and 98% of the diameter D4. In an embodiment the diameter D6 can be between 50 and 95% of the diameter D3 of the idler gear 48. In another embodiment the diameter D6 can be between 60 and 95% of the diameter D3. In still another embodiment the diameter D6 can be between 70 and 90% of the diameter D3. The third bearing surface 132 can be spaced from the surface 136 of the central portion 98. The height H3 can in an embodiment be such that the distance W3 between the bearing surface 132 and the surface 136 is between 0 and 1 mm. In an embodiment the distance can be between 10 and 500 micrometer. In another embodiment the distance W3 can be between 10 and 100 micrometer.

The peripheral surfaces 94, 108 can provide an interface between the gear 48 and the hub 46. The diameter D1 of the hub 46 can be equal to or larger than the length L1 of the hub 46. In an embodiment the diameter D1 can be at least about 1.2 times the length L1. This can in an embodiment provide for a relatively big interface and a relatively small depth of the gear case 14. The diameter D3 of the idler gear 48 can be substantially bigger than the diameter D5 of the central opening 102. In an embodiment the diameter D3 can be more than twice the diameter D5. In another embodiment the diameter D3 can be between 2 and 10 times the diameter D5. In still another embodiment the diameter D3 can be between 3 and 7 times the diameter D5. In an embodiment the diameter D2 of the mount 80 can be more than 1.05 times the diameter D1 of the hub 46. In an embodiment the diameter D2 can be between 1.1 and 4 times the diameter D1. In still another embodiment the diameter D2 can be between 1.2 and 3 times the diameter D1. In an embodiment the bearing surface 94 of the mount 80 is substantially flat and free of holes.

In an embodiment at least one of the peripheral surfaces 96, 108 of the hub 46 and the central opening 102 respectively can be provided with a low friction coating layer 140, such that the interface between the idler gear 48 and the hub 46 comprises at least one layer 140 of low friction coating. In an embodiment the low friction coating can be a DLC coating. In another embodiment the low friction coating can be a polymer coating. In an embodiment the polymer coating can comprise at least two of the components MoS2, graphite and PA1 In an embodiment the polymer coating can comprise all of these components. In an embodiment the peripheral surface 96 of the hub 46 can be provided with the layer 140 of coating. In another embodiment the peripheral surface 96 can be provided with a DLC coating. In still another embodiment the peripheral surface 96 can be provided with the polymer coating. In an embodiment the peripheral surface 108 of the central opening 102 can be provided with a layer 140 of coating. In another embodiment the peripheral surface 108 can be provided with a DLC coating. In still another embodiment the peripheral surface 108 can be provided with the polymer coating. In an embodiment in which one of the peripheral surfaces 96, 108 is provided with a coating, such as a DLC coating or the polymer coating, the other of the peripheral surfaces can have a hardened surface. The hardened surface 96, 108 can be case hardened. In another embodiment the other of the peripheral surfaces can have the same or another coating. In an embodiment one of the peripheral surfaces can have a DLC coating and the other of the peripheral surfaces a polymer coating. The or each coating and the relatively small clearances between bearings surfaces can provide for low friction and can prevent larger material parts such as debris to be entrapped between for example the peripheral surfaces 96, 108, whereas heat transport is still sufficiently possible.

In an embodiment at least one of the cooperating bearing surfaces 94 and 110 can be provided with a coating layer 142. In an embodiment the or each coating layer 142 can be chosen from the group of DLC coating and polymer coating comprising at least two of the components MoS2, graphite and PA1. In an embodiment the peripheral surface 96 of the hub 46 and the bearing surface 94 can be provided with a layer 140, 142 of the same coating. In an embodiment that coating can be a DLC coating. In another embodiment that coating can be a polymer coating.

In an embodiment the bottom surface 124 can be a bearing surface. In an embodiment at least one of the cooperating bearing surfaces 112 and 124 can be provided with a coating layer 144, 146 respectively. In an embodiment the or each coating layer 144, 146 can be chosen from the group of DLC coating and polymer coating comprising at least two of the components MoS2, graphite and PA1. In an embodiment the peripheral surface 108 of the central opening 102 and the bearing surfaces 110, 112 can be provided with a layer 140, 144 of the same coating. In an embodiment that coating can be a DLC coating. In another embodiment that coating can be a polymer coating. The bearing surface 124 can have a coating layer 146 which in an embodiment can be the same coating as provided on the bearing surface 112. In another embodiment the coating layer 146 can be a different coating, which can be chosen from the same group.

In an embodiment at least one of the third bearing surface 132 and the cooperating surface 138 can be provided with a coating layer 148, 150 respectively. In an embodiment the or each coating layer 148, 150 can be chosen from the group of DLC coating and polymer coating comprising at least two of the components MoS2, graphite and PA1. In an embodiment the bearing surfaces 132, 138 can be provided with a layer 148, 150 of the same coating. In an embodiment that coating can be a DLC coating. In another embodiment that coating can be a polymer coating. In another embodiment the coating layers 148, 150 can be different coatings, which can be chosen from the same group.

In an embodiment the coating at least one of the coating layers can have a hardness (Vickers) above 500. The hardness can in an embodiment be between 500 and 15000. In another embodiment the hardness can be between 1000 and 3000. In still another embodiment the hardness can be between about 3000 and 12000 Vickers (Hᵥ) In an embodiment the coating layer can have a friction coefficient between 0.01 and 0.2. In another embodiment the friction coefficient can be between about 0.01 and 0.15. In a still further embodiment the coefficient can be about 0.1. The coating layer can in an embodiment have an average thickness between about 0.001 and 50 micrometer. In another embodiment the thickness can be between about 0.002 and 10 micrometer. In an embodiment the coating can have a low sliding wear coefficient. In an embodiment the sliding wear coefficient can be between about 4×10-17 m³ N⁻¹ m⁻¹ and 9.8×10-18 m³ N⁻¹ m⁻¹ In an embodiment at least one of the peripheral surfaces 96, 108 can have a coating having a combination of some or all of these properties, such as but not limited to a DLC coating having a hardness between 1000 and 3000 (Vickers), a thickness between about 0.001 and 10 µm and a friction coefficient of about 0.1.

Between the peripheral surfaces 96, 108 a clearance can be provided, such as a peripheral clearance, which clearance can provide a lubrication space 138. In an embodiment the lubrication space can be an annular space. In an embodiment the lubrication space 138 can be a splash lubrication space, designed for splash lubrication. The idler gear 48 can be positioned directly on the hub 46, enclosed between the bearing surface 94 of the mount 80 or flange and the retaining plate 78. The idler gear can at the same time be in engagement with the main gear 62, fuel injection pump gear 64, power take off gear 68 and the cam shaft gear 52, resulting in a relative balance of forces on the idler gear.

### Industrial Applicability

The disclosed embodiments of an idler gear 48 and hub 46, as well as a timing gear case 14 can be applicable to any combustion type engine 10 where different gears are to be used for driving different parts of the engine 10 and/or power take offs, driven by at least one common gear. By applying an idler gear 48 and hub 46 according to the disclosure the idler gear 48 can be fitted directly on the hub 46, without the necessity of additional bearings. A gear assembly or timing gear case with gears according to the description can be lighter and more maintenance friendly then known gear assemblies and timing gear cases.

In preparation of assembling a hub 46 and idler gear 48, in an embodiment the peripheral surface of the hub 46 and the bearing surface 94 of the mount 80 can be coated with a layer coating. In an embodiment the coating can be a DLC coating. In another embodiment the coating can be a polymer coating. The coating layer can be applied in any known way, for example but not limited to chemical vapor deposition (CVD), vapor deposition (VD), spraying, dipping or lackering. The internal peripheral surface 108 of the central opening 102 of the idler gear 48 can be surface finished, for example but not limited to by polishing, hardening, case hardening or honing. In an embodiment the bearing surfaces 110, 112 of the rim 106 can have a similar surface finishing. In the same or another embodiment the retaining plate 78 could be provided on the second side 118 or at least on the bottom surface 124 and the third bearing surface 132 with a similar surface finish or with a coating. In an embodiment a DLC coating can be applied.

In another embodiment the interior peripheral surface 108 of the central opening 102 can be provided with a layer of coating. In an embodiment the coating can be a DLC coating. In another embodiment the coating can be a polymer coating. The coating layer can be applied in any known way, for example but not limited to chemical vapor deposition (CVD), vapor deposition (VD), spraying, dipping or lackering. In an embodiment the same coating can be applied to the first and/or second surfaces 110, 112 of the rim 106. In an embodiment the peripheral surface 96 of the hub 46 can be provided with a surface finish, for example but not limited to by polishing, hardening, case hardening or honing. The bearing surface 94 of the mount 80 can in an embodiment be provided with the same or a similar surface finish. In this or another embodiment the second surface 116 of the retaining plate 78 can be provided with a similar finish as discussed before with respect to the peripheral surface 96 of the hub 46. In an embodiment the entire retaining plate 78 can be hardened.

In still another embodiment one of the peripheral surfaces 96, 108 can be provided with one of a DLC coating and a polymer coating and the other of the peripheral surfaces 96, 108 can be provided with the other of the DLC and polymer coatings. In a further embodiment both peripheral surfaces can be provided with the same coating, which can be DLC coating or polymer coating.

In an embodiment a timing gear case 14 can be fitted to the first end 16 of an engine block 12, as shown in fig. 1. In the first opening 40 in the bottom 38 of the timing gear case 14 holes 87 can be seen, for fitting the bolts 88. The idler gear 48 can be positioned over the hub 46 with the central opening 102, such that the surface 112 of the rim 106 is pushed up to the mount surface 94. Then the retaining plate 78 can be positioned against the free end 92, enclosing the idler gear 48 between the mount 80 and the retaining plate 78. The mount 80 can then be positioned against the first end 16 of the engine block 12, and bolts 88 can be inserted through the bores 86 and screwed into the holes 87, for mounting the mount 80 and/or hub 46 against the engine block 12 and thereby positioning the idler gear 48.

The other gears, such as but not necessarily limited to or including all of the main gear 62, fuel injection pump gear 64, power take off gear 68 and the cam shaft gear 52 can be mounted in the timing gear case 14, in engagement with the toothed rim 100 of the idler gear 48. The timing gear box can be closed by the cover 32. When then the crank shaft 60 is rotated, the main gear 62 will be rotated, thereby driving the idler gear 48 in rotation around the hub 46. In an embodiment oil or another lubricant can be provided in the timing gear case. Rotation of the gears, such as gears 52, 62, 64, 68 within the timing gear case 14 will then lead to splashing of the lubricant inside the timing gear case, which can splash lubricate the interface between the hub 46 and idler gear 48, such as but not limited to the peripheral surfaces 96, 108.

In an embodiment in which there is no opening 40 in the bottom surface 38 the mount 80 or the hub 46 can be mounted directly on the bottom surface 38 of the timing gear case. In such embodiment the hub 46 can be provided in the timing gear case 14 first, and then the timing gear case 14 can be fitted against the engine block 12, or the timing gear case 14 can be fitted against the engine block 12 first, after which the hub 46 can be fixed onto the bottom 38 of the timing gear case 14.

It should be noted that all combinations of embodiments and parts thereof as discussed and/or disclosed here before are considered to be disclosed in this description also. Although the preferred embodiments of this invention have been described herein, improvements and modifications may be incorporated without departing from the scope of the following claims.

## Claims

1. An idler gear assembly for a timing gear case, comprising the following components:
an idler gear (48) having a toothed rim (100) and a central opening (102);
an idler gear hub (46) having a mount (80) for mounting to a gear housing of an engine or an engine block of an engine; and
a retaining plate (78) for retaining the idler gear (48) on the hub (46),
**characterized in that**
at least one surface of a component of the idler gear assembly that is to serve as bearing surface between two components (48, 46, 78) of the idler gear assembly comprises a low friction coating,
wherein the low friction coating is a DLC coating, or
wherein the low friction coating is a polymer based coating comprising:
- at least one of MoS₂, graphite and PAI in case the at least one surface is an outer peripheral surface (96) of the idler gear hub (46) or an internal peripheral surface (108) of a central bore (102) of the idler gear (48), or
- at least two of MoS₂, graphite and PAI in case the at least one surface is another of the bearing surfaces.

2. An idler gear assembly according to claim 1, wherein the at least one bearing surface is the internal peripheral surface (108) of the central bore (102) of the idler gear (48), and/or a first ring shaped surfaces (110) of a cylindrical rim (106) around the central bore (102) of the idler gear (48), and/or a second ring shaped surface (112) of the cylindrical rim (106) around the central bore (102) of the idler gear (48), and/or a surface (138) provided between the cylindrical rim (106) and the toothed rim (100) of the idler gear (48), and/or the outer peripheral surface (96) of the hub (46), and/or a lateral surface (94) of the mount (80) of the hub (46), and/or a surface provided on a bottom surface (124) of a central recess (120) of the retaining plate (78), and/or a surface (132) of a peripheral wall or rim (122) surrounding the bottom surface (124) of the central recess (120) of the retaining plate (78), and/or the surface of the peripheral rim (122) of the recess (120) of the retaining plate (78).

3. An idler gear assembly according to claim 1 or claim 2, wherein at least one of corresponding bearing surfaces forming an interface of the at least two components comprises a low friction coating layer consisting of a DLC coating or a polymer based coating comprising at least two of MoS₂, graphite and PAI.

4. An idler gear assembly according to claim 2 or claim 3, comprising:
an idler gear (48) having a toothed rim (100) and a central opening (102);
an idler gear hub (46) having a mount (80) for mounting to a gear housing of an engine or an engine block of an engine;
wherein the central opening (102) of the gear (48) is positioned over the gear hub (46), providing an interface (96, 108) between the gear (48) and the hub (46),
which interface (96, 108) comprises a low friction coating layer (140) consisting of a DLC coating or a polymer based coating comprising MoS₂, graphite and PAI on at least one of the hub (46) and the gear (48).

5. An idler gear assembly according to claim 4, wherein the hub (46) has a peripheral surface (96), provided with the coating layer (140).

6. An idler gear assembly according to claim 5, wherein the coating layer (140) comprises or is formed of a DLC coating.

7. An idler gear assembly according to claim 4, wherein the central opening (102) of the gear (48) has an interior peripheral surface (108), provided with the coating layer (140).

8. An idler gear assembly according to claim 7, wherein the coating layer (140) comprises or is formed of a polymer based coating comprising MoS₂, graphite and PAI or a DLC coating.

9. An idler gear assembly according to any one of claims 4 - 8, wherein a lubrication space is provided between the hub (46) and the central opening (102) of the gear (48).

10. An idler gear assembly according to claim 2, the assembly comprising a hub for an idler gear, comprising:
a mounting flange (82); and
a hub (46) extending from the flange (82);
wherein the hub (46) has an outer peripheral surface (96) comprising a first low friction coating (140) consisting of a DLC coating or a polymer based coating comprising at least one of MoS₂, graphite and PAI.

11. An idler gear assembly according to claim 10, wherein the flange (82) comprises a bearing surface (94) comprising a second low friction coating (142).

12. An idler gear assembly according to claim 11, wherein the second low friction coating (142) is a DLC coating or a polymer based coating comprising at least two of MoS₂, graphite and PAI.

13. An idler gear assembly according to claim 2, the assembly comprising an idler gear, comprising:
a toothed rim (100); and
a central bore (102) having a internal peripheral surface (108);
wherein the internal peripheral surface (108) comprises a low friction coating (140) consisting of a DLC coating or a polymer based coating comprising at least one of MoS₂, graphite and PAI.

14. An idler gear assembly according to claim 13, further comprising a cylindrical rim (106) around the central bore (102), wherein the rim (106) comprises a first substantially ring shape bearing surface (110, 112) at a first side of the gear (48), the first bearing surface (110, 112) comprising a third low friction coating (142, 144).

15. An idler gear assembly according to claim 14, wherein the rim (106) comprises a second substantially ring shaped bearing surface (110, 112), the second bearing surface (110, 112) comprising a fourth low friction coating (142, 144).

16. An idler gear assembly according to claim 14 or claim 15, wherein the third and/or the fourth low friction coating (142, 144) is a coating chosen from a group of a DLC coating or a polymer based coating comprising at least two of MoS2, graphite and PAI.

17. An idler gear assembly according to claim 2, comprising a retaining plate for retaining an idler gear on a hub, wherein the retaining plate (78) is substantially circular, comprising a first side (116) and an opposite second side (118), the second side (118) having a central recess (120), surrounded by a peripheral rim (122) and having a bottom surface (124), the bottom surface (124) comprising a first bearing surface provided with a fifth low friction coating (146) and/or the peripheral rim (122) comprising a second bearing surface (132) with a sixth low friction coating (148).

18. An idler gear assembly according to claim 17, wherein the fifth low friction coating (146) and/or the sixth low friction coating (148) is a coating chosen from the group of a DLC coating or a polymer based coating comprising at least two of MoS2, graphite and PAI.

19. An idler gear assembly according to claim 4, wherein the idler gear (48) is an idler gear according to any of claims 13 to 16, and/or the hub for the idler gear according to any of claims 10 to 12, the idler gear assembly further comprising a retaining plate (78) according to claim 17 or claim 18.

20. A timing gear case for a combustion engine (10), comprising:
a gear case (14) having a gear housing space (26) including:
a bottom (38); and
a wall (42);
timing gears; and
a idle gear assembly according to any of claims 4 to 9 or 19,
wherein the idler gear (48) and the timing gears are provided in the gear housing space (26);
wherein the idler gear hub (46) is provided in or on the bottom (38).

21. A timing gear case according to claim 20, wherein splash lubrication is provided for lubricating the bearing surface (96, 108).

22. A combustion engine, comprising:
a timing gear case (14) according to claim 20 or 21.

## Patentansprüche

1. Eine Zwischenradbaugruppe für ein Steuergehäuse, aufweisend die folgenden Komponenten:
Ein Zwischenrad (48) das einen gezahnten Rand (100) und eine zentrale Öffnung (102) hat;
ein Zwischenradnabe (46), die eine Befestigung (80) zum Befestigen an einem Getriebegehäuse eines Motors oder einem Motorblock eines Motors hat; und
eine Halteplatte (78) zum Halten des Zwischenrads (48) auf der Nabe (46),
**dadurch gekennzeichnet, dass**
mindestens eine Fläche einer Komponente der Zwischenradbaugruppe, die als Lagerfläche zwischen zwei Komponenten (48, 46, 78) der Zwischenradbaugruppe dienen soll, eine reibungsarme Beschichtung aufweist,
wobei die reibungsarme Beschichtung eine DLC-Beschichtung ist, oder
wobei die reibungsarme Beschichtung eine Beschichtung auf Polymerbasis ist, welche aufweist:
- Mindestens eines der Folgenden: MoS2, Graphit und PAI, falls die mindestens eine Fläche eine äußere periphere Fläche (96) der Zwischenradnabe (46) oder eine innere periphere Fläche (108) einer zentralen Bohrung (102) des Zwischenrads (48) ist, oder
- mindestens zwei der Folgenden: MoS2, Graphit und PAI, falls die mindestens eine Fläche eine andere der Lagerflächen ist.

2. Eine Zwischenradbaugruppe nach Anspruch 1,
wobei die mindestens eine Lagerfläche die innere periphere Fläche (108) der zentralen Bohrung (102) des Zwischenrads (48) ist, und/oder eine erste ringförmige Fläche (110) eines zylindrischen Rands (106) um die zentrale Bohrung (102) des Zwischenrads (48) ist, und/oder eine zweite ringförmige Fläche (112) des zylindrischen Rands (106) um die zentrale Bohrung (102) des Zwischenrads (48) ist, und/oder eine Fläche (138), die zwischen dem zylindrischen Rand (106) und dem gezahnten Rand (100) des Zwischenrads (48) bereitgestellt ist, und/oder die äußere periphere Fläche (96) der Nabe (46) ist, und/oder eine seitliche Fläche (94) der Befestigung (80) der Nabe (46) ist, und/oder eine Fläche ist, die auf einer unteren Fläche (124) einer zentralen Vertiefung (120) der Halteplatte (78) bereitgestellt ist, und/oder eine Fläche (132) einer peripheren Wand oder eines peripheren Rands (122) ist, die oder der die untere Fläche (124) der zentralen Vertiefung (120) der Halteplatte (78) umgibt, und/oder die Fläche des peripheren Rands (122) der Vertiefung (120) der Halteplatte (78) ist.

3. Eine Zwischenradbaugruppe nach Anspruch 1 oder Anspruch 2,
wobei mindestens eine von entsprechenden Lagerflächen, die eine Schnittstelle der mindestens zwei Komponenten bilden, eine reibungsarme Beschichtungsschicht aufweist, die aus einer DLC-Beschichtung oder einer Beschichtung auf Polymerbasis, die mindestens zwei der Folgenden: MoS₂, Graphit und PAI, aufweist, besteht.

4. Eine Zwischenradbaugruppe nach Anspruch 2 oder Anspruch 3, aufweisend:
ein Zwischenrad (48) das einen gezahnten Rand (100) und eine zentrale Öffnung (102) hat;
ein Zwischenradnabe (46), die eine Befestigung (80) zum Befestigen an einem Getriebegehäuse eines Motors oder einem Motorblock eines Motors hat;
wobei die zentrale Öffnung (102) des Zahnrads (48) über der Zahnradnabe (46) positioniert ist und so eine Schnittstelle (96, 108) zwischen dem Zahnrad (48) und der Nabe (46) bereitstellt,
welche Schnittstelle (96, 108) auf mindestens einem der Nabe (46) und des Zahnrads (48), eine reibungsarme Beschichtungsschicht (140) aufweist, die aus einer DLC-Beschichtung oder einer Beschichtung auf Polymerbasis, die MoS₂, Graphit und PAI aufweist, besteht.

5. Eine Zwischenradbaugruppe nach Anspruch 4, wobei die Nabe (46) eine periphere Fläche (96) hat, die mit der Beschichtungsschicht (140) versehen ist.

6. Eine Zwischenradbaugruppe nach Anspruch 5, wobei die Beschichtungsschicht (140) eine DLC-Beschichtung aufweist oder aus einer solchen gebildet ist.

7. Eine Zwischenradbaugruppe nach Anspruch 4, wobei die zentrale Öffnung (102) des Zahnrads (48) eine innere periphere Fläche (108) hat, die mit der Beschichtungsschicht (140) versehen ist.

8. Eine Zwischenradbaugruppe nach Anspruch 7, wobei die Beschichtungsschicht (140) eine Beschichtung auf Polymerbasis, die die MoS₂, Graphit und PAI aufweist, oder eine DLC-Beschichtung aufweist oder aus einer solchen gebildet ist.

9. Eine Zwischenradbaugruppe nach einem der Ansprüche 4-8, wobei ein Schmierungsraum zwischen der Nabe (46) und der zentralen Öffnung (102) des Zahnrads (48) bereitgestellt ist.

10. Eine Zwischenradbaugruppe nach Anspruch 2, welche Baugruppe eine Nabe für ein Zwischenrad aufweist, aufweisend:
einen Befestigungsflansch (82); und
eine Nabe (46), die sich von dem Flansch (82) her erstreckt,
wobei die Nabe (46) eine äußere periphere Fläche (96) hat, die eine erste reibungsarme Beschichtung (140) aufweist, die aus einer DLC-Beschichtung oder aus einer Beschichtung auf Polymerbasis, die mindestens eines der Folgenden: MoS₂, Graphit und PAI, aufweist, besteht.

11. Eine Zwischenradbaugruppe nach Anspruch 10, wobei der Flansch (82) eine Lagerfläche (94) aufweist, die eine zweite reibungsarme Beschichtung (142) aufweist.

12. Eine Zwischenradbaugruppe nach Anspruch 11, wobei die zweite reibungsarme Beschichtung (142) eine DLC-Beschichtung oder eine Beschichtung auf Polymerbasis, die mindestens zwei der Folgenden: MoS₂, Graphit und PAI, aufweist, ist.

13. Eine Zwischenradbaugruppe nach Anspruch 2, welche Baugruppe ein Zwischenrad aufweist, aufweisend:
einen gezahnten Rand (100); und
eine zentrale Bohrung (102), die eine innere periphere Fläche (108) hat;
wobei die eine innere periphere Fläche (108) eine reibungsarme Beschichtung (140) aufweist, die aus einer DLC-Beschichtung oder aus eine Beschichtung auf Polymerbasis, die mindestens eines der Folgenden: MoS₂, Graphit und PAI, aufweist, besteht.

14. Eine Zwischenradbaugruppe nach Anspruch 13, ferner aufweisend einen zylindrischen Rand (106) um die zentrale Bohrung (102), wobei der Rand (106) eine erste, im Wesentlichen ringförmige Lagerfläche (110, 112) auf einer ersten Seite des Zahnrads (48) aufweist, welche erste Lagerfläche (110, 112) eine dritte reibungsarme Beschichtung (142, 144) aufweist.

15. Eine Zwischenradbaugruppe nach Anspruch 14, wobei der Rand (106) eine zweite im Wesentlichen ringförmige Lagerfläche (110, 112) aufweist, welche zweite Lagerfläche (110, 112) eine vierte reibungsarme Beschichtung (142, 144) aufweist.

16. Eine Zwischenradbaugruppe nach Anspruch 14 oder Anspruch 15, wobei die dritte und/oder die vierte reibungsarme Beschichtung (142, 144) eine Beschichtung ist, die aus einer Gruppe aus einer DLC-Beschichtung oder einer Beschichtung auf Polymerbasis, die mindestens zwei der Folgenden: MoS₂, Graphit und PAI, aufweist, ausgewählt ist.

17. Eine Zwischenradbaugruppe nach Anspruch 2, aufweisend eine Halteplatte zum Halten eines Zwischenrads auf einer Nabe, wobei die Halteplatte (78) im Wesentlichen rund ist, aufweisend eine erste Seite (116) und eine gegenüberliegende zweite Seite (118), welche zweite Seite (118) eine zentrale Vertiefung (120) hat, die von einem peripheren Rand (122) umgeben ist und eine untere Fläche (124) hat, welche untere Fläche (124) eine erste Lagerfläche aufweist, die mit einer fünften reibungsarmen Beschichtung (146) versehen ist, und/oder der periphere Rand (122) eine zweite Lagerfläche (132) mit einer sechsten reibungsarmen Beschichtung (148) aufweist.

18. Eine Zwischenradbaugruppe nach Anspruch 17, wobei die fünfte reibungsarme Beschichtung (146) und/oder die sechste reibungsarme Beschichtung (148) eine Beschichtung ist, die aus der Gruppe aus einer DLC-Beschichtung oder einer Beschichtung auf Polymerbasis, die mindestens zwei der Folgenden: MoS2, Graphit und PAI, aufweist, ausgewählt ist.

19. Eine Zwischenradbaugruppe nach Anspruch 4, wobei das Zwischenrad (48) ein Zwischenrad nach einem der Ansprüche 13 bis 16 ist, und/oder die Nabe für das Zwischenrad nach einem der Ansprüche 10 bis 12, welche Zwischenradbaugruppe ferner eine Halteplatte (78) nach Anspruch 17 oder Anspruch 18 aufweist.

20. Ein Steuergehäuse für einen Verbrennungsmotor (10), aufweisend:
ein Getriebegehäuse (14), das einen Getriebegehäuseraum (26) hat, der umfasst:
eine Unterseite (38); und
eine Wand (42);
Steuerräder; und
eine Zwischenradbaugruppe nach einem der Ansprüche 4 bis 9 oder 19,
wobei das Zwischenrad (48) und die Steuerräder in dem Getriebegehäuseraum (26) bereitgestellt sind;
wobei die Zwischenradnabe (46) in oder auf der Unterseite (38) bereitgestellt ist.

21. Ein Steuergehäuse nach Anspruch 20, wobei Tauchschmierung zum Schmieren der Lagerfläche (96, 108) bereitgestellt ist.

22. Ein Verbrennungsmotor, aufweisend:
ein Steuergehäuse (14) nach Anspruch 20 oder 21.

## Revendications

1. Ensemble de pignon baladeur pour une boîte d'engrenages de distribution, comprenant les composés suivants :
un pignon baladeur (48) ayant un rebord denté (100) et une ouverture centrale (102) ;
un moyeu de pignon baladeur (46) ayant un support (80) pour le montage sur un logement d'engrenages d'un moteur ou d'un bloc moteur d'un moteur ; et
une plaque de retenue (78) pour retenir le pignon baladeur (48) sur le moyeu (46), **caractérisé en ce qu'**au moins une surface d'un composant de l'ensemble de pignon baladeur qui est destinée à servir de surface d'appui entre deux composants (48, 46, 78) de l'ensemble de pignon baladeur comprend un revêtement à faible friction,
dans lequel le revêtement à faible friction est un revêtement de DLC ou
dans lequel le revêtement de faible friction est un revêtement à base de polymère comprenant :
- au moins l'un parmi du Mois2, du graphite et du PAI dans le cas où la au moins une surface est une surface périphérique externe (96) du moyeu de pignon baladeur (46) ou une surface périphérique interne (108) d'un alésage central (102) du pignon baladeur (48), ou
- au moins deux parmi du MoS₂, du graphite et du PAI dans le cas où la au moins une surface est une autre des surfaces d'appui.

2. Ensemble de pignon baladeur selon la revendication 1, dans lequel la au moins une surface d'appui est la surface périphérique interne (108) de l'alésage central (102) du pignon baladeur (48) et/ou une première surface de forme annulaire (110) d'un rebord cylindrique (106) autour de l'alésage central (102) du pignon baladeur (48) et/ou une seconde surface de forme annulaire (112) du rebord cylindrique (106) autour de l'alésage central (102) du pignon baladeur (48), et/ou une surface (138) présente entre le rebord cylindrique (106) et le rebord denté (100) du pignon baladeur (48), et/ou la surface périphérique externe (96) du moyeu (46), et/ou une surface latérale (94) du support (80) du moyeu (46), et/ou une surface présente sur une surface inférieure (124) d'une cavité centrale (120) de la plaque de retenue (78), et/ou une surface (132) d'une paroi ou d'un rebord périphérique (122) entourant la surface inférieure (124) de la cavité centrale (120) de la plaque de retenue (78), et/ou la surface du rebord périphérique (122) de la cavité (120) de la plaque de retenue (78).

3. Ensemble de pignon baladeur selon la revendication 1 ou la revendication 2, dans lequel au moins l'une de surfaces d'appui correspondantes formant une interface des au moins deux composants comprend une surface de revêtement à faible friction constituée d'un revêtement de DLC ou d'un revêtement à base de polymère comprenant au moins deux parmi du MoS₂, du graphite et du PAI.

4. Ensemble de pignon baladeur selon la revendication 2 ou la revendication 3, comprenant :
un pignon baladeur (48) ayant un rebord denté (100) et une ouverture centrale (102) ;
un moyeu de pignon baladeur (46) ayant un support (80) pour un montage sur une boîte d'engrenages d'un moteur ou d'un bloc moteur d'un moteur ;
dans lequel l'ouverture centrale (102) du pignon (48) est positionnée sur le moyeu de pignon (46), fournissant une interface (96, 108) entre le pignon (48) et le moyeu (46),
laquelle interface (96, 108) comprend une couche de revêtement de faible friction (140) constituée d'un revêtement de DLC ou d'un revêtement à base de polymère comprenant du MoS₂, du graphite et du PAI sur au moins l'un du moyeu (46) et du pignon (48).

5. Ensemble de pignon baladeur selon la revendication 4, dans lequel le moyeu (46) a une surface périphérique (96) pourvue de la couche de revêtement (140).

6. Ensemble de pignon baladeur selon la revendication 5, dans lequel la couche de revêtement (140) comprend un revêtement de DLC ou est formée de celui-ci.

7. Ensemble de pignon baladeur selon la revendication 4, dans lequel l'ouverture centrale (102) du pignon (48) a une surface périphérique interne (108) pourvue de la couche de revêtement (140).

8. Ensemble de pignon baladeur selon la revendication 7, dans lequel la couche de revêtement (140) comprend ou est formée d'un revêtement à base de polymère comprenant du MoS₂, du graphite et du PAI ou d'un revêtement de DLC.

9. Ensemble de pignon baladeur selon l'une quelconque des revendications 4 à 8, dans lequel un espace de graissage est ménagé entre le moyeu (46) et l'ouverture centrale (102) du pignon (48).

10. Ensemble de pignon baladeur selon la revendication 2, l'ensemble comprenant un moyeu pour un pignon baladeur, comprenant :
une bride de montage (82) ; et
un moyeu (46) s'étendant de la bride (82) ;
dans lequel le moyeu (46) a une surface périphérique externe (96) comprenant un premier revêtement de faible friction (140) constitué d'un revêtement de DLC ou d'un revêtement à base de polymère comprenant au moins l'un parmi du MoS₂, du graphite et du PAI.

11. Ensemble de pignon baladeur selon la revendication 10, dans lequel la bride (82) comprend une surface d'appui (94) comprenant un second revêtement de faible friction (142).

12. Ensemble de pignon baladeur selon la revendication 11, dans lequel le second revêtement de faible friction (142) est un revêtement de DLC ou un revêtement à base de polymère comprenant au moins deux parmi du MoS₂,du graphite et du PAI.

13. Ensemble de pignon baladeur selon la revendication 2, l'ensemble comprenant un pignon baladeur, comprenant :
un rebord denté (100) ; et
un alésage central (102) ayant une surface périphérique interne (108) ;
dans lequel la surface périphérique interne (108) comprend un revêtement de faible friction (140) constitué d'un revêtement de DLC ou d'un revêtement à base de polymère comprenant au moins l'un parmi du MoS₂, du graphite et du PAI.

14. Ensemble de pignon baladeur selon la revendication 13, comprenant en outre un rebord cylindrique (106) autour de l'alésage central (102), dans lequel le rebord (106) comprend une première surface d'appui de forme sensiblement annulaire (110, 112) sur un premier côté du pignon (48), la première surface d'appui (110, 112) comprenant un troisième revêtement de faible friction (142, 144).

15. Ensemble de pignon baladeur selon la revendication 14, dans lequel le rebord (106) comprend une seconde surface d'appui de forme sensiblement annulaire (110, 112), la seconde surface d'appui (110, 112) comprenant un quatrième revêtement de faible friction (142, 144).

16. Ensemble de pignon baladeur selon la revendication 14 ou la revendication 15, dans lequel le troisième et/ou le quatrième revêtement de faible friction (142, 144) est ou sont un revêtement choisi dans un groupe d'un revêtement de DLC ou d'un revêtement à base de polymère comprenant au moins deux parmi du MoS₂, du graphite et du PAI.

17. Ensemble de pignon baladeur selon la revendication 2, comprenant une plaque de retenue pour retenir un pignon baladeur sur un moyeu, dans lequel la plaque de retenue (78) est sensiblement circulaire, comprenant un premier côté (116) et un second côté opposé (118), le second côté (118) ayant une cavité centrale (120) entourée par un rebord périphérique (122) et ayant une surface inférieure (124), la surface inférieure (124) comprenant une première surface d'appui pourvue d'un cinquième revêtement de faible friction (146) et/ou le rebord périphérique (122) comprenant une seconde surface d'appui (132) avec un sixième revêtement de faible friction (148).

18. Ensemble de pignon baladeur selon la revendication 17, dans lequel le cinquième revêtement de faible friction (146) et/ou le sixième revêtement de faible friction (148) est ou sont un revêtement choisi dans le groupe d'un revêtement de DLC ou d'un revêtement à base de polymère comprenant au moins deux parmi du MoS2, du graphite et du PAI.

19. Ensemble de pignon baladeur selon la revendication 4, dans lequel le pignon baladeur (48) est un pignon baladeur selon l'une quelconque des revendications 13 à 16 et/ou le moyeu pour le pignon baladeur selon l'une quelconque des revendications 10 à 12, l'ensemble de pignon baladeur comprenant en outre une plaque de retenue (78) selon la revendication 17 ou la revendication 18.

20. Boîte d'engrenages de distribution pour un moteur à combustion (10), comprenant :
une boîte d'engrenages (14) ayant un espace de logement d'engrenages (26) comprenant :
un fond (36) ; et
une paroi (42) ;
des pignons de distribution ; et
un ensemble de pignon baladeur selon l'une quelconque des revendications 4 à 9 ou 19,
dans lequel le pignon baladeur (48) et les pignons de distribution sont disposés dans l'espace de logement d'engrenages (26) ;
dans lequel le moyeu de pignon baladeur (46) est disposé dans ou sur le fond (38).

21. Boîte d'engrenages de distribution selon la revendication 20, dans laquelle un graissage par barbotage est fourni pour lubrifier la surface d'appui (96, 108).

22. Moteur à combustion comprenant:
une boîte d'engrenages de distribution (14) selon la revendication 20 ou la revendication 21.
